# EUROPÄISCHE PATENTSCHRIFT

(11) **EP 0 513 483 B1**
(45) Veröffentlichungstag und Bekanntmachung des Hinweises auf die Patenterteilung: **30.11.1994**
(21) Anmeldenummer: 92103302.3
(22) Anmeldetag: 27.02.1992
(51) Int. Cl.: A47J 43/08, H02K 9/04

(54) **Elektrisch betriebene Küchenmaschine**
Electric household food processor
Robot de cuisine électrique

(30) Priorität: 11.05.1991 DE 4115471
(43) Veröffentlichungstag der Anmeldung: 19.11.1992
(73) Patentinhaber: Braun Aktiengesellschaft, Frankfurt am Main (DE)
(72) Erfinder: Bauer, Alfred, W-6078 Neu Isenburg (DE); Börger, Georg, W-6374 Steinbach (DE); Kamprath, Karl-Heinz, W-6200 Wiesbaden (DE)

(56) Entgegenhaltungen:
- CH-A- 468 737
- DE-A- 1 613 263
- DE-A- 3 408 693
- DE-A- 3 446 859
- DE-B- 1 098 171
- DE-B- 1 103 531
- DE-C- 170 187
- PATENT ABSTRACTS OF JAPAN, vol. 8, no. 264 (E-282)(1701), 4. Dezember 1984;& JP-A-59 136 043 (MATSUSHITA DENKI SANGYO K.K.) 04-08-1984

## Beschreibung

Die Erfindung betrifft eine elektrisch betriebene Küchenmaschine für die Bearbeitung und Zubereitung von Nahrungsmitteln aller Art, mit einem in einem Gehäuse angeordneten Elektromotor, der ein in einem Arbeitsbehälter befindliches Arbeitswerkzeug zur Behandlung der Nahrungsmittel in Drehung versetzt und der über ein im Gehäuse drehbar angeordnetes, motorisch angetriebenes Lüfterrad mit Kühlluft versorgt wird, wobei der Elektromotor und das Lüfterrad in einem Luftleitkanal angeordnet sind, der an seinem einen Ende einen Lufteinlaß und an seinem anderen Ende einen Luftauslaß bildet.

Eine derartige Küchenmaschine ist beispielsweise aus der DE-A 34 08 693 bekannt. Bei dieser Küchenmaschine treibt der senkrecht im Motorgehäuse angeordnete Elektromotor über eine aus zwei Zahnrädern und einem Zahnriemen bestehende Getriebenanordnung ein auf einer Abtriebswelle aufsteckbares Arbeitswerkzeug an, das in einem Arbeitsbehälter rotiert und somit die im Arbeitsbehälter befindlichen Nahrungsmittel je nach Ausbildung des Arbeitswerkzeuges verkleinert, vermischt, knetet etc. Das erste, meist mit kleinerem Durchmesser versehene Zahnrad ist mit der Antriebswelle des Elektromotors drehfest verbunden, während das zweite Zahnrad auf der das Arbeitswerkzeug aufnehmenden Abtriebswelle befestigt ist. Zur Erzeugung von Kühlluft sind an dem zweiten Zahnrad Luftleitbleche ausgebildet, die mit dem Zahnrad das Lüfterrad bilden. Bei dieser Anordnung erzeugt das Lüfterrad in Abhängigkeit der Drehzahl des Elektromotors mehr oder weniger Kühlluft, das heißt, je höher die Drehzahl des Elektromotors ist, desto mehr Kühlluft wird dem Elektromotor zugeführt.

Bei Elektromotoren ist es allgemein bekannt, daß ihre Drehzahl, wenn ihnen hohe Motorleistungen abverlangt werden, stark abfällt und wenn sie geringe Drehmomente abgeben müssen, ihre Drehzahl zunimmt. Auf Grund der vom Elektromotor abhängigen Drehzahl des Lüfterrades verringert sich also der kühlende Luftstrom des Lüfterrades gerade dann, wenn große Verlustleistungen eine größere Kühlung des Elektromotors erfordern. Umgekehrt liefert des Lüfterrad bei kleinen Verlustleistungen, also dann, wenn der Elektromotor nur eine geringe Leistung abgibt, oder gar im Leerlauf dreht, sehr große Luftmengen, obwohl in diesem Zustand eine starke Kühlung des Elektromotors gar nicht erforderlich ist.

Diese Nachteile führen dazu, daß bei hohen Lastmomenten und kleinen Drehzahlen nur sehr kurze Betriebszeiten möglich sind, weil der durch das Lüfterrad erzeugte Luftstrom im Regelfall nicht zur Kühlung des Elektromotors ausreicht, will man nicht einen erheblich größer dimensionierten Elektromotor verwenden, der zu erheblichen Mehrkosten der Küchenmaschine führen würde. Andererseits ergibt sich bei der Leerlaufdrehzahl des Elektromotors der Nachteil, daß zwar eine starke Kühlung vorhanden ist, diese aber gar nicht benötigt wird. Hierdurch ergeben sich sehr große Lauf- und Luftgeräusche, insbesondere im Leerlauf.

Aus der DE 34 30 023 A1 ist eine Bohrmaschine bekannt, deren Antriebsmotor durch ein von einem zusätzlichen Lüftermotor angetriebenes Lüfterrad gekühlt wird. Dabei wird die Drehzahl und damit die Kühlleistung des zusätzlichen Lüftermotors mit Hilfe eines Temperaturfühlers in Abhängigkeit von der Betriebstemperatur des Elektromotors gesteuert. Nachteilig bei dieser Art der Regelung der Kühlleistung ist es, daß die Temperatur, die an der Meßstelle des Temperaturfühlers gemessen wird, deutlich hinter der tatsächlichen Temperatur der Wicklung des Motors zeitlich hinterherhinken kann. So kann es bei einem schnellen Anstieg der dem Motor abgeforderten Leistung zu unerwünschten oder gar gefährlichen Temperaturspitzen an den Wicklungen kommen, bevor diese wieder durch eine erhöhte Kühlleistung des Lüftermotors abgebaut werden.

Aufgabe der Erfindung ist es daher, eine Küchenmaschine für den häuslichen Bedarf zu schaffen, die die oben erwähnten Nachteile nicht aufweist, die dennoch totz verhältnismäßig hoher Motorleistungen kompakt baut, deren Motorgeräusche erbeblich reduziert sind und die einen hohen Kühlwirkungsgrad aufweist.

Diese Aufgabe wird nach der Erfindung dadurch gelöst, daß das Lüfterrad von einem getrennt vom Elektromotor im Gehäuse ausgebildeten, weiteren elektrisch betriebenen Lüftermotor angetrieben wird, daß sich in Strömungsrichtung vom Lufteinlaß zum Luftauslaß im Luftleitkanal an den Elektromotor der Lüftermotor mit dem Lüfterrad anschließt, daß der Luftleitkanal U-förmig ausgebildet ist und daß der Elektromotor und der Lüftermotor jeweils in einem Schenkel des U-förmig ausgebildeten Luftleitkanals angeordnet ist. Durch den zusätzlichen Lüftermotor kann der Elektromotor bei verhältnismäßig hohen Motorleistungen dennoch in seiner Baugröße sehr klein gebaut sein, da die bei einer überlast auftretende hohe Erwärmung durch den Lüftermotor und das Lüfterrad schnell und wirkungsvoll abgeführt wird. Dies ermöglicht eine besonders leichte und kompakte Bauweise einer Küchenmaschine bei dennoch großer Leistung, was sich unter anderem beim Transport der Küchenmaschine besonders vorteilhaft auswirkt.

Durch den zusätzlichen Lüftermotor können weiterhin die Motorgeräusche, die durch die Kühlluft erzeugt werden, bei geringen Lastmomenten, also hoher Drehzahl , gering gehalten werden. Die besonders intensive Kühlung des Elektromotors bei geringstem Strömungswiderstand wird dadurch erreicht, daß sich in Strömungsrichtung vom Lufteinlaß zum Luftauslauß im Luftleitkanal an den Elektromotor der Gebläsemotor mit dem Lüfterrad anschließt. Durch diese Anordnung saugt also das Lüfterrad Kühlluft über den Lufteinlaß in das Innere des Elektromotors, vorbei am Lüftermotor, zum Luftauslaß. Eine besonders kompakte Bauweise der Küchenmaschine wird dadurch erreicht, daß der Luftleitkanal U-förmig ausgebildet ist, wobei der Elektromotor und der Lüftermotor jeweils in einem Schenkel des U-förmig ausgebildeten Luftleitkanals angeordnet sind. Diese Anordnung ermöglicht weiterhin eine einfache maschinelle Montage der Antriebsmotoren im Luftleitkanal, da ein senkrechter Nebeneinandereinbau dieser Teile auf dem Sockel der Küchenmaschine möglich wird.

Damit auch der Lüftermotor vom kühlenden Luftstrom umströmt wird und gleichzeitig hohe Kühlluftgeschwindigkeiten erreicht werden, ist in einer Weiterbildung der Erfindung vorgesehen, daß der Lüftermotor zwischen dem Lüfterrad und dem Elektromotor im Luftleitkanal angeordnet ist. Durch eine geeignete Querschnittsausbildung des Luftleitkanals im Bereich des Lüftermotors kann eine Strömungsgeschwindigkeit am Lüftermotor erzielt werden, durch die auch die am Lüftermotor entstehende Verlustleistung in Form von Wärme ausreichend schnell abgeführt wird. Durch den Saugeffekt kann der Kühlwirkungsgrad der Küchenmaschine erheblich gesteigert werden.

Um einen besonders kurzen Luftleitkanal zu erhalten, ist es vorteilhaft, daß der Elektromotor einen in einem Statorgehäuse umlaufenden Rotor aufweist, daß der zwischen dem Rotor und dem Statorgehäuse des Elektromotors gebildete Freiraum einen Teil des Luftleitkanals bildet und daß das Lüfterrad am Luftauslaß angeordnet ist. An dem dem Lufteinlaß des Elektromotors gegenüberliegenden Ende schließt sich also erst an das Statorgehäuse der eigentliche Luftleitkanal an, in dem dann der Lüftermotor mit dem Lüfterrad angeordnet ist. Hierdurch entsteht ein in der Höhe nicht allzu lang bauendes, in der Länge akzeptables Gehäuse bei gleichmäßigerer Gewichtsverteilung.

Es ist vorteilhaft, daß der Lufteinlaß seitlich am Gehäuse und der Luftauslaß nahe an der Bodenplatte der Küchenmaschine ausgebildet sind. Durch die verschiedenen Austrittsrichtungen der Kühlluft aus dem Gehäuse der Küchenmaschine wird erreicht, daß sich die erwärmte Kühlluft nicht mit der angesaugten, noch kühlen Kühlluft vermischt. Wird das Lüfterrad von einem Radialgebläserad gebildet, so läßt sich dieses in einem ohnehin bereits vorhandenen Luftleitkanal besonders einfach integrieren, da der Luftleitkanal aus Kunststoff in einem Spritzwerkzeug hergestellt wird. Radialgebläseräder bauen besonders flach und erzeugen bei hohen Drehzahlen hohe Kühlluftströme. Die hohen Drehzahlen sind bei denjenigen Lüftermotoren, die hier zum Einsatz kommen, nämlich klein bauende Elektromotoren, nicht ungewöhnlich.

Liegen die Achsen von Arbeitswerkzeug, Elektromotor und Lüftermotor etwa auf einer gemeinsamen Ebene, so kann die Breite der Küchenmaschine auf das geringste Maß reduziert werden. Ebenso ergibt sich für das Gehäuse des Luftleitkanals eine mit möglichst wenig Winkeln versehene Ausgestaltung. Sind im Luftleitkanal Aufnahmeeinrichtungen für den Elektromotor und den Lüftermotor vorgesehen, so kann auf zusätzliche Befestigungsmittel verzichtet werden, um den Antriebs- und Lüftermotor im Gehäuse des Luftleitkanals zu befestigen.

In einer Weiterbildung der Erfindung ist vorgesehen, daß zwischen dem Lüftermotor und dem Lüfterrad eine Getriebeanordnung ausgebildet ist. Die Getriebeanordnung ermöglicht eine optimale Anpassung der für den Elektromotor erforderlichen Kühlluft bei vorgegebenen Kenndaten eines Lüftermotors.

In einer Weiterbildung der Erfindung ist vorgesehen, daß der Lüftermotor und der Elektromotor elektrisch derart miteinander verschaltet sind, daß bei ansteigendem Lastmoment am Elektromotor auch die vom Lüftermotor abgegebene Kühlleistung ansteigt.

Hierdurch wird erreicht, daß der Lüftermotor erst dann zugeschaltet wird, wenn die Erwärmung im Elektromotor so groß ist, daß eine Kühlung des Elektromotors erforderlich wird. Läuft beispielsweise der Elektromotor in seiner Leerlaufdrehzahl, so ist in den meisten Fällen eine zusätzliche Kühlung des Elektromotors nicht erforderlich, da die im Elektromotor entstehende Verlustleistung nicht zu einer nennenwerten Erwärmung des Elektromotors führt. Der durch den Lüftermotor fließende Ankerstrom ist dabei so gering, daß der Lüftermotor erst gar nicht anläuft oder allenfalls mit sehr niederer Drehzahl arbeitet, so daß Kühlluftgeräusche am Lüfterrad praktisch nicht auftreten und daher die Küchenmaschine einen sehr ruhigen Lauf aufweist. Steigt aber die Leistung des Elektromotors und somit die von ihm abgegebene Wärmemenge an, so läuft der Lüftermotor mit einer entsprechenden Drehzahl.

Eine leistungsabhängige, stufenlose Regelung der Drehzahl des Lüftermotors wird dadurch erreicht, daß, je höher das Lastmoment, also auch die Wärmeabgabe am Elektromotor ist, desto mehr Strom fließt durch den Lüftermotor, der, da er unbelastet ist, dadurch seine Drehzahl entsprechend erhöht und somit eine erhöhte Kühlleistung erbringt. Hierdurch wird ein dauerhafter Betrieb der Küchenmaschine auch bei maximaler Leistung des Elektromotors möglich, ohne daß eine thermische Überlastung am Elektromotor auftritt.

Es ist vorteilhaft, daß sowohl der Elektromotor als auch der Lüftermotor in Reihe geschaltete Gleichstrommotoren sind, so daß beide Motoren vom selben Ankerstrom durchflossen sind und daß die Nennspannung des Lüftermotors wesentlich kleiner ist als die des Elektromotors. Bei Verwendung von Gleichstrommotoren ist es, da diese nur einen sehr geringen Freiraum zwischen dem Rotor und dem Statorgehäuse aufweisen, besonders vorteilhaft, wenn die Kühlluft vom Lufteinlaß durch den Elektromotor zum Radialgebläserad gesaugt wird. Beim Hindurchsaugen der Luft durch den Luftleitkanal werden nämlich - anders als bei deren Hindurchdrücken - Wirbel und somit Strömungsverluste weitgehendst vermieden, was den Kühlwirkungsgrad der Küchenmaschine erheblich verbessert. Durch die wesentlich kleinere Nennspannung des Lüftermotors bestimmt die Stromaufnahme des Antriebsmotors im wesentlichen den durch beide Motoren fließenden Gesamtstrom. Die Drehzahl des Lüftermotors ist also von der aufgenommenen Leistung des Antriebsmotors abhängig, d.h., die Kühlleistung steigt an, wenn der Ankerstrom des Antriebsmotors bei ansteigendem Lastmoment zunimmt. Die Drehzahl und damit die Kühlleistung des Lüftermotors fällt andererseits auch wieder ab, wenn ds Lastmoment am Antriebsmotor und damit auch dessen Ankerstrom wieder abnimmt.

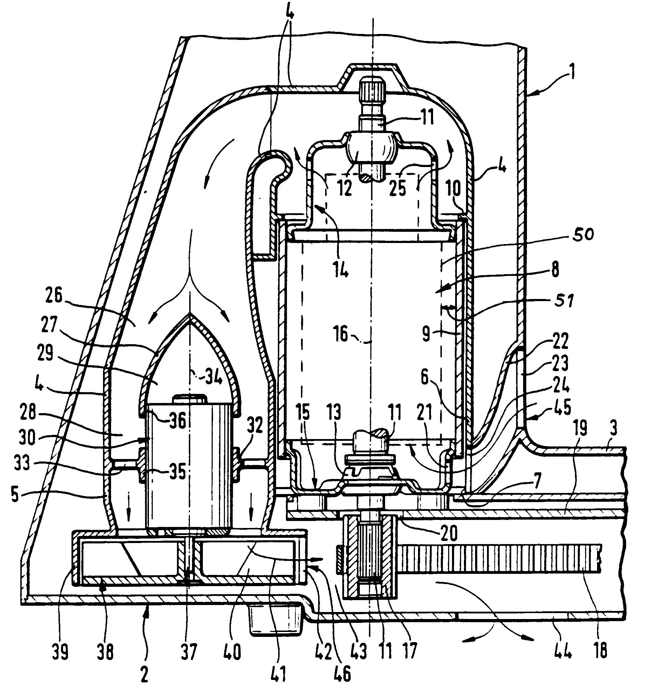

Ein Ausführungsbeispiel der Erfindung ist in der einzigen Figur dargestellt und wird im folgenden näher beschrieben:

In der einzigen Figur ist im Längsschnitt ein Teilausschnitt des Motorgehäuses einer Universalküchenmaschine dargestellt. Das die Motoreinheit aufnehmende Gehäuse 1 verläuft im linken Außenbereich von seinem Bodenteil 2 kegelförmig verjüngend nach oben und in seinem rechten Bereich im wesentlichen senkrecht zur Bodenplatte 2. Während der kegelförmig verlaufende Bereich des Gehäuses 1 an der Außenfläche der im wesentlichen horizontal verlaufenden Bodenplatte 2 bündig, also zumindest staubdicht abschließt, geht der rechte Bereich des Gehäuses 1 in seinem unteren Abschnitt in einen horizontal nach rechts verlaufenden Abschnitt 3 über, der im Abstand zur Bodenplatte 2 oberhalb dieser verläuft.

Zwischen den beiden Wandungen des Gehäuses 1 ist im Inneren ein sich im wesentlichen von der Bodenplatte 2 nach oben erstreckender Luftleitkanal 4 ausgebildet, der im wesentlichen U-förmig derart verläuft, daß seine beiden freien Schenkel 5, 6 zur Bodenplatte 2 hin gerichtet sind. Der Schenkel 6 weist an seinem freien Ende eine kreisförmige Öffnung 7 auf, in die von unten her der Elektromotor 8 eingesetzt ist. Das rohrförmige Statorgehäuse 9 des Elektromotors 8 ist soweit in den rohrförmig ausgebildeten freien Schenkel 6 des Luftleitkanals eingeschoben, daß er mit seinem oberen freien Ende an einem im Inneren des freien Schenkels 6 ausgebildeten Ringbund 10 anschlägt. Der Elektromotor 8 wird von einer Antriebswelle 11 durchdrungen, die gleichzeitig den mit Wicklungen versehenen Rotor (nicht dargestellt) bildet. Die Antriebswelle 11 ist sowohl im oberen wie im unteren Bereich durch je ein Kalottenlager 12, 13 drehbar gelagert, die wiederum in je einem mit dem Statorgehäuse 9 fest verbundenen Lagerschild 14, 15 gehalten werden. Die Verbindungslinie der beiden Lagerschilder 14, 15 bildet die Lagerachse bzw. Mittellinie 16 des Elektromotors 8.

Das in der Zeichnung untere Ende der Antriebswelle 11 ist mit einem Zahnritzel 17 versehen, in das umfangsseitig ein Zahnriemen 18 eingreift. Der Zahnriemen 18 verläuft vom Zahnritzel 17 in der Zeichnung nach rechts und ist mit einem in der Zeichnung nicht dargestellten Zahnrad verbunden, an dem eine Abtriebswelle befestigt ist. Die Abtriebswelle ist weiterhin in einer zwischen dem Abschnitt 3 und der Bodenplatte 2 ausgebildeten Trägerplatte 19 drehbar gelagert und durchdringt über eine in der Zeichnung nicht dargestellte Öffnung den Abschnitt 3 nach oben. Die Abtriebswelle kann in einer ersten Ausführungsform in den Innenraum eines auf dem Abschnitt 3 abstellbaren Arbeitsbehälters hineinragen, wo sie mit aufsetzbaren Arbeitswerkzeugen mit dieser drehfest bestückt werden kann. In einer anderen Ausführungsform kann eine am Boden des Arbeitsbehälters gelagerte weitere Antriebswelle befestigt sein, die über eine Kupplungsanordnung mit der mit dem zweiten Zahnrad verbundenen Abtriebswelle kuppelbar ist. Auch hier wird der Arbeitsbehälter auf einer am Abschnitt 3 ausgebildeten Zentriervorrichtung gegenüber der Arbeitswerkzeuge im Betrieb ortsfest gehalten. Innerhalb des Arbeitsbehälters ist an der Antriebswelle eine weitere Kupplungseinrichtung angeordnet, auf die dann die entsprechenden Arbeitswerkzeuge aufsteckbar und drehfest mit dieser kuppelbar sind (nicht dargestellt).

Die Trägerplatte 19 ist an in der Zeichnung nicht dargestellten Befestigungspunkten mit dem Gehäuse 1 der Küchenmaschine befestigt und verläuft im wesentlichen parallel zur Bodenplatte 2. Am linken Ende der Trägerplatte 19 sind in der Zeichnung nicht dargestellte Befestigungsmittel vorgesehen, an denen der Elektromotor 8 fest angeflanscht wird. Eine in der Trägerplatte 19 ausgebildete Bohrung 20 dient zum Durchdringen des freien Endes der Antriebswelle 11, um unterhalb der Trägerplatte 19 über das Zahnritzel 17 mit dem Zahnriemen 18 in Eingriff zu gelangen.

Am unteren Lagerschild 15 sind nach der Figur Einlaßöffnungen 21 vorgesehen, die mit einem am unteren rechten Umfang des freien Schenkels 6 des Luftleitkanals 4 verlaufenden Zuführkanal 22 in Strömungsmittelverbindung stehen. Der Zuführkanal 22 ist an die rechte Wandung des Gehäuses 1 angeformt und ist über an dieser Wandung ausgebildete Schlitze 23 mit der Außenluft verbunden. Die Schlitze 23 sind in diesem Ausführungsbeispiel in der Zeichenebene dargestellt, in Wirklichkeit sind sie aber nicht im Bereich des an diese Wand angrenzenden Behälters, sondern an der nach außen gerichteten Wand, also an der Seitenwand der Küchenmaschine ausgebildet. Der Zuführkanal 22 greift in eine am freien Schenkel 6 des Luftleitkanals 4 ausgebildete Einlaßöffnung 24 dichtend ein.

Am in der Zeichnung oberen Lagerschild 14 sind Luftaustrittsöffnungen 25 vorgesehen. Von dieser Stelle aus krümmt sich der Luftleitkanal 4 nach links und verläuft dann wieder in der Zeichnung nach unten, so daß sich ein u-förmiger Verlauf des Luftleitkanals 4 ergibt. In der vom freien Schenkel 5 des Luftleitkanals 4 gebildeten Kammer 26 ist eine kegelförmige Trennwand 27 angeordnet, die dafür sorgt, daß der oberhalb ausgebildete kreisförmige Querschnitt des Luftleitkanals 4 in einen ringförmigen Querschnitt übergeht, so daß der von der Ringkammer 28 eingeschlossene, im Querschnitt kreisförmige Freiraum 29 zur Aufnahme des Lüftermotors 30 dient. Die kegelförmig, nach unten sich erweiternde Trennwand 27 hat weiterhin den Vorteil, daß der Lüftermotor 30 für den Luftstrom einen geringen Luftwiderstand darstellt.

Unterhalb der Trennwand 27 sind an der Wandung des Luftleitkanals 4 radial nach innen sich erstreckende Haltearme 32 ausgebildet. die mit die Luft nach unten durchströmenden Durchlässen 33 versehen sind. Die radial zur Mittellinie 34 des Lüftermotors 30 gerichteten Haltearme 32 enden in einer die Haltearme 32 miteinander verbindenden Ringhülse 35, in der der Lüftermotor 30 von unten her soweit eingeschoben wird, bis sein in der Zeichnung oberes freies Ende in der Aufnahmeöffnung 36 der Trennwand 27 zentriert wird. Die Ringhülse 35 ist in ihrem Durchmesser so ausgebildet, daß der Lüftermotor 30 mittels eines Preßsitzes in ihr gehalten wird. Auf der nach unten aus dem Lüftermotor 30 herausragenden Welle 37 ist das Lüfterrad 38 befestigt. Der Durchmesser des als Radialgebläserad ausgebildeten Lüfterrades 38 wird radial von außen von einer ringförmigen Abschirmung 39 umgeben, deren Durchmesser größer ist, als der lichte Durchmesser der Ringkammer 28. Das Radialgebläserad 38 ist mit Luftleitwänden 40 bestückt, die die Luft aus der Ringkammer 28 radial in Pfeilrichtung 41 zur Bodenplatte 2 hinströmen lassen. Während die Schlitze 23 den eigentlichen Lufteinlaß 45 des Luftleitkanals 4 bilden, bildet die Öffnung 42 den eigentlichen Luftauslaß 46.

Die Wirkungsweise der erfindungsgemäßen Küchenmaschine ist folgende:
Wird der Elektromotor 8 eingeschaltet, so treibt das auf dem Rotor 50 der Antriebswelle 11 befestigte Zahnritzel 17 den Zahnriemen 18 an, durch den wiederum die in der Zeichnung nicht dargestellte Abtriebswelle und somit das Arbeitswerkzeug im Arbeitsbehälter in Drehung versetzt wird. Solange der Elektromotor 8 nur mit einem geringen Lastmoment betrieben wird und daher kaum nennenswerte Erwärmung erzeugt, wird der Lüftermotor nur von einem kleinen Ankerstrom durchflossen. Infolgedessen bleibt der Lüftermotor 30 entweder im Stillstand oder dreht sich nur mit einer kleinen Drehzahl. Erhöht sich das Lastmoment und damit die Temperatur am Elektromotor 8, so wird über eine in der Zeichnung nicht dargestellte elektrische Schaltungsanordnung der Lüftermotor 30 auf eine eine entsprechende Kühlleistung erzeugende Drehzahl gebracht.

Nun wird über die an der Seitenwand der Küchenmaschine ausgebildeten Schlitze 23 Luft zu den Einlaßöffnungen 21 und von dort in den Ringraum 51 des Elektromotors 8 eingesaugt, die sich dann an den erhitzten Wicklungen des Rotors 51 im Elektromotor 8 erwärmt und an den Luftaustrittsöffnungen 25 wieder aus dem Elektromotor 8 heraustritt. Dem Luftleitkanal 4 folgend, strömt die erwärmte Luft nun an der Trennwand 27 und dem Lüftermotor 30 durch die Durchlässe 33 zum Radialgebläserad 38 hin, wo sie radial nach außen umgelenkt wird und an einer an der Abschirmung 39 ausgebildeten Öffnung 42 in den unterhalb des Elektromotors 8 angeordneten Getrieberaum 43 befördert wird, von wo sie dann letztendlich nach unten über die in der Bodenplatte 2 ausgebildeten Austrittsöffnungen 44 zu der in der Zeichnung nicht dargestellten Abstellplatte ins Freie befördert wird.

Um die Lüftführung im Luftleitkanal besser zu verdeutlichen, wurden in der Zeichnung Luftführungspfeile 41 eingebracht. Sobald das Lastmoment unter einen vorgegebenen Wert fällt, wird der Lüftermotor 30 entweder wieder ganz ausgeschaltet, oder mit kleinerer Drehzahl betrieben, so daß praktisch nur noch die vom Elektromotor abgegebenen Motorgeräusche zu hören sind.

## Patentansprüche

1. Elektrisch betriebene Küchenmaschine für die Bearbeitung und Zubereitung von Nahrungsmitteln aller Art, mit einem in einem Gehäuse (1) angeordneten Elektromotor (8), der ein in einem Arbeitsbehälter befindliches Arbeitswerkzeug zur Behandlung der Nahrungsmittel in Drehung versetzt und der über ein im Gehäuse (1) drehbar angeordnetes, motorisch angetriebenes Lüfterrad (38) mit Kühlluft versorgt wird, wobei der Elektromotor (8) und das Lüfterrad (38) in einem Luftleitkanal (4) angeordnet sind, der an seinem einen Ende einen Lufteinlaß (45) und an seinem anderen Ende einen Luftauslaß (46) bildet,
**dadurch gekennzeichnet**,
daß das Lüfterrad (38) von einem getrennt vom Elektromotor (8) im Gehäuse (1) angeordneten, weiteren elektrisch betriebenen Lüftermotor (30) angetrieben wird, daß sich in Strömungsrichtung vom Lufteinlaß (45) zum Luftauslaß (46) im Luftleitkanal (4) an den Elektromotor (8) der Lüftermotor (30) anschließt, daß der Luftleitkanal (4) U-förmig ausgebildet ist und daß der Elektromotor (8) und der Lüftermotor (30) jeweils in einem Schenkel (5, 6) des U-förmig ausgebildeten Luftleitkanals (4) angeordnet ist.

2. Küchenmaschine nach Anspruch 1,
**dadurch gekennzeichnet**,
daß der Lüftermotor (30) zwischen dem Lüfterrad (38) und dem Elektromotor (8) im Luftleitkanal (4) angeordnet ist.

3. Küchenmaschine nach Anspruch 2,
**dadurch gekennzeichnet**,
daß der Elektromotor (8) einen in einem Statorgehäuse (9) umlaufenden Rotor (50) aufweist, daß der zwischen dem Rotor (50) und dem Statorgehäuse (9) des Elektromotors (8) gebildete Freiraum (51) einen Teil des Luftleitkanals (4) bildet und daß das Lüfterrad (38) am Luftauslaß (46) angeordnet ist.

4. Küchenmaschine nach einem der vorhergehenden Ansprüchen,
**dadurch gekennzeichnet**,
daß der Lufteinlaß (45) seitlich am Gehäuse (1) und der Luftauslaß (46) nahe an der Bodenplatte (2) der Küchenmaschine ausgebildet sind.

5. Küchenmaschine nach Anspruch 1,
**dadurch gekennzeichnet**,
daß das Lüfterrad (38) von einem Radialgebläserad gebildet wird.

6. Küchenmaschine nach Anspruch 1,
**dadurch gekennzeichnet**,
daß die Achsen (16, 34) von Arbeitswerkzeug, Elektromotor (8) und Lüftermotor (30) etwa auf einer gemeinsamen Ebene liegen.

7. Küchenmaschine nach Anspruch 1,
**dadurch gekennzeichnet**,
daß zwischen dem Lüftermotor (30) und dem Lüfterrad (38) eine Getriebeanordnung ausgebildet ist.

8. Küchenmaschine nach Anspruch 1,
**dadurch gekennzeichnet**,
daß im Luftleitkanal (4) Aufnahmeeinrichtungen (10, 27, 35) für den Elektromotor (8) und den Lüftermotor (30) vorgesehen sind.

9. Küchenmaschine nach Anspruch 8,
**dadurch gekennzeichnet**,
daß der Luftleitkanal (4) aus zwei Halbschalen zusammengesetzt ist.

10. Küchenmaschine nach einem der vorhergehenden Ansprüche,
**dadurch gekennzeichnet**,
daß der Lüftermotor (30) und der Elektromotor (8) elektrisch derart miteinander verschaltet sind, daß bei ansteigendem Lastmoment am Elektromotor (8) auch die vom Lüftermotor (30) abgegebene Kühlleistung ansteigt.

11. Küchenmaschine nach Anspruch 10,
**dadurch gekennzeichnet**,
daß sowohl der Elektromotor (8) als auch der Lüftermotor (30) in Reihe geschaltete Gleichstrommotoren sind, so daß beide Motoren (8, 30) vom selben Ankerstrom durchflossen sind und daß die Nennspannung des Lüftermotors (30) wesentlich kleiner ist als die des Elektromotors (8).

## Claims

1. An electrically powered food processing apparatus for processing and preparing any type of food, including an electric motor (8) arranged in a housing (1) and rotating a processing tool located in a working vessel for processing the food material, said electric motor being supplied with cooling air by means of a motor-driven impeller (38) rotatably arranged in said housing (1), said electric motor (8) and said impeller (38) being disposed in an air duct (4) providing at its one end an air inlet (45) and at its other end an air outlet (46),
**characterized in that** said impeller (38) is driven by an additional electrically powered impeller motor (30) arranged in said housing (1) separate from said electric motor (8), that said impeller motor (30) is arranged in said air duct (4) downstream from said electric motor (8) when viewed in the direction of air flow from said air inlet (45) to said air outlet (46), that said air duct (4) is of a U-shaped configuration, and that said electric motor (8) and said impeller motor (30) are arranged in a respective arm (5, 6) of said U-shaped air duct (4).

2. The food processing apparatus as claimed in claim 1,
**characterized in that** said impeller motor (30) is arranged in said air duct (4) intermediate said impeller (38) and said electric motor (8).

3. The food processing apparatus as claimed in claim 2,
**characterized in that** said electric motor (8) includes a rotor (50) rotating in a stator frame (9), that a clearance (51) between said rotor (50) and said stator frame (9) of said electric motor (8) forms part of said air duct (4), and that said impeller (38) is arranged proximate to said air outlet (46).

4. The food processing apparatus as claimed in any one of the preceding claims,
**characterized in that** said air inlet (45) is provided laterally on said housing (1), and that said air outlet (46) is provided in the proximity of said bottom plate (2) of said food processing apparatus.

5. The food processing apparatus as claimed in claim 1,
**characterized in that** said impeller (38) is of the radial fan type.

6. The food processing apparatus as claimed in claim 1,
**characterized in that** the axes (16, 34) of processing tool, electric motor (8) and impeller motor (30) are arranged on an approximately common plane.

7. The food processing apparatus as claimed in claim 1,
**characterized in that** a transmission means is provided between said impeller motor (30) and said impeller (38).

8. The food processing apparatus as claimed in claim 1,
**characterized in that** mounting structures (10, 27, 35) for said electric motor (8) and said impeller motor (30) are provided in said air duct (4).

9. The food processing apparatus as claimed in claim 8,
**characterized in that** said air duct (4) is composed of two half shells.

10. The food processing apparatus as claimed in any one of the preceding claims,
**characterized in that** said impeller motor (30) and said electric motor (8) are electrically interconnected such that an increase in the load torque of said electric motor (8) produces an increase in the cooling power delivered by said impeller motor (30).

11. The food processing apparatus as claimed in claim 10,
**characterized in that** both said electric motor (8) and said impeller motor (30) are series-connected direct-current motors, so that the same armature current flows through both of said motors (8, 30), and the rated voltage of said impeller motor (30) is substantially lower than that of said electric motor (8).

## Revendications

1. Robot ménager électrique pour le traitement et la préparation de produits alimentaires en tout genre, comprenant un moteur électrique (8) agencé dans un boîtier (1), ledit moteur électrique mettant en rotation un outil de travail situé dans un récipient de travail, pour le traitement des aliments. et ledit moteur étant alimenté en air de refroidissement au moyen d'une roue de ventilateur (38) motorisée et agencée en rotation dans le boîtier (1), le moteur électrique (8) et la roue de ventilateur (38) étant agencés dans un conduit (4) de guidage d'air qui forme une entrée d'air (45) à l'une de ses extrémités et une sortie d'air (46) à son autre extrémité,
caractérisé en ce que la roue de ventilateur (38) est entraînée par un second moteur électrique (30) séparé du moteur électrique (8) et agencé dans le boîtier (1), en ce que le second moteur (30) est situé à la suite du moteur électrique (8) dans le conduit de guidage d'air (4) dans la direction d'écoulement depuis l'entrée d'air (45) vers la sortie d'air (46), en ce que le conduit de guidage d'air (4) est réalisé en forme de U, et en ce que le moteur électrique (8) et le moteur de ventilateur (30) sont agencés chacun dans l'un des bras (5, 6) du conduit de guidage d'air (4) en forme de U.

2. Robot ménager selon la revendication 1, caractérisé en ce que le moteur de ventilateur (30) est agencé entre la roue de ventilateur (38) et le moteur électrique (8) dans le conduit de guidage d'air (4).

3. Robot ménager selon la revendication 2, caractérisé en ce que le moteur électrique (8) comprend un rotor (50) en rotation dans un boîtier-stator (9), en ce que l'espace libre (51) formé entre le rotor (50) et le boîtier-stator (9) du moteur électrique (8) constitue une partie du conduit de guidage d'air (4), et en ce que la roue de ventilateur (38) est agencée a la sortie d'air (46).

4. Robot ménager selon l'une quelconque des revendications précédentes; caractérisé en ce que l'entrée (45) est réalisée latéralement dans le boîtier (1) et en ce que la sortie d'air (46) est réalisée au voisinage de la plaque de fond (2) de la robot ménager.

5. Robot ménager selon la revendication 1, caractérisé en ce que la roue de ventilateur (38) est formée par une roue de ventilateur radial.

6. Robot ménager selon la revendication 1, caractérisé en ce que les axes (16, 34) de l'outil de travail, du moteur électrique (8), et dit moteur de ventilateur (30) sont approximativement situés dans un plan commun.

7. Robot ménager selon la revendication 1, caractérisé en ce qu'un ensemble de transmission est réalisé le moteur de ventilateur (30) et la roue de ventilateur (38).

8. Robot ménager selon la revendication 1, caractérisé en ce qu'il est prévu dans le conduit de guidage d'air (4) des organes de réception (10, 27, 35) pour le moteur électrique (8) et le moteur de ventilateur (30).

9. Robot ménager selon la revendication 8, caractérisé en ce que le conduit de guidage (4) est composé de deux demi-coques.

10. Robot ménager selon l'une quelconque des revendications précédentes, caractérisé en ce que le moteur de ventilateur (30) et le moteur électrique (8) sont branchés électriquement l'un à l'autre de telle manière que lorsque le couple de charge du moteur électrique (8) s'élève, la puissance de refroidissement fournie par le moteur de ventilateur (30) s'élève également.

11. Robot ménager selon la revendication 10, caractérisé en ce que tant le moteur électrique (8) que le moteur de ventilateur (30) sont des moteurs à courant continu branchés en série, de sorte que les deux moteurs (8, 30) sont traversés par le même courant d'armature, et en ce que la tension nominale du moteur de ventilateur (30) est sensiblement plus faible que celle du moteur électrique (8).
